# EUROPÄISCHE PATENTSCHRIFT

(11) **EP 4 096 893 B1**
(45) Veröffentlichungstag und Bekanntmachung des Hinweises auf die Patenterteilung: **13.12.2023**
(21) Anmeldenummer: 21710178.1
(22) Anmeldetag: 26.01.2021
(51) Int. Cl.: B29C 35/10, B05D 3/02, F26B 3/347, B29D 7/01, C08J 5/18, F26B 17/04, F26B 3/20, B29C 35/08

(54) **VORRICHTUNG ZUR ERWÄRMUNG UND TROCKNUNG ZUMINDEST EINES PRODUKTS AUS EINEM NICHT FERROMAGNETISCHEN MATERIAL**
DEVICE FOR HEATING AND DRYING AT LEAST ONE PRODUCT MADE FROM A NON-FERROMAGNETIC MATERIAL
DISPOSITIF POUR CHAUFFER ET SÉCHER AU MOINS UN PRODUIT EN MATIÈRE NON FERROMAGNÉTIQUE

(30) Priorität: 27.01.2020 AT 500632020
(43) Veröffentlichungstag der Anmeldung: 07.12.2022
(73) Patentinhaber: Berndorf Band GmbH, 2560 Berndorf (AT)
(72) Erfinder: PROSCHEK, Michael, 2525 Schönau (AT)
(74) Vertreter: Burger, Hannes
(86) Internationale Anmeldenummer: PCT/AT2021/060027
(87) Internationale Veröffentlichungsnummer: WO 2021/151133

(56) Entgegenhaltungen:
- EP-A1- 3 025 799
- EP-A1- 3 190 859
- WO-A1-2006/101220
- US-A- 4 795 872
- US-A- 5 321 896
- US-A1- 2002 043 531
- US-A1- 2004 250 692
- US-A1- 2005 121 437
- US-A1- 2008 002 996
- US-A1- 2009 003 866
- US-A1- 2015 202 830

## Beschreibung

Die Erfindung betrifft eine Vorrichtung zur Erwärmung und Trocknung zumindest eines Produkts aus einem nicht ferromagnetischen Material, insbesondere eines Films, beispielsweise eines TAC-Films oder eines PVOH-Films, wobei die Vorrichtung zumindest ein zwischen zumindest zwei Rollen umlaufendes Endlosband aus Metall aufweist, wobei das Endlosband ein Obertrum sowie ein Untertrum aufweist, und eine Bandaußenseite des Obertrums eine Transportfläche für das Produkt bildet, wobei die Vorrichtung eine Heizvorrichtung zur Erwärmung des Produktes aufweist.

Vorrichtungen der eingangs genannten Art kommen beispielsweise bei der Herstellung von Filmen, insbesondere von Triacetatfilmen, welche insbesondere für die Produktion von LCD-Bildschirmen verwendet werden, oder von PVOH-Filmen, welche beispielsweise für Verpackungen verwendet werden, zum Einsatz. Natürlich können auch Filme jeglicher anderer Art, beispielsweise Filme auf Basis nachwachsender Rohstoffe, insbesondere Nano-Zellulose Filme, hergestellt werden. Auch sei an dieser Stelle darauf hingewiesen, dass in dem vorliegenden Zusammenhang unter dem Begriff "Film" auch Folien verstanden werden. Bei der Herstellung von Filmen mittels Endlosband läuft ein als Prozessband für das Auftragen und den Transport des Films dienendes Endlosband zwischen einer Antriebsrolle und einer Umlenkrolle um, zwischen welchen das Band eingespannt ist.

Bei Vorrichtungen der oben genannten Art wird das Endlosband von der Umlenkrolle um näherungsweise 180° umgelenkt. Obertrum und Untertrum verlaufen dabei im Wesentlichen parallel zueinander. Das Obertrum bildet im Stand der Technik häufig eine Auflagefläche und/oder Transportfläche für ein Medium, welches beispielsweise in flüssiger Form auf das sich bewegende und zwischen der Antriebsrolle und der Umlenkrolle umlaufende Endlosband, welches aus Metall gefertigt sein kann, aufgebracht wird.

Das Endlosband wird mittels Heizelementen, die sich bauartbedingt üblicherweise zumindest über die gesamte Breite des Endlosbandes erstrecken erwärmt, um das Produkt zu trocknen. Da das zu trocknende Produkt jedoch üblicherweise nicht die gesamte Bandbreite bedeckt, bildet sich zwischen den von dem Produkt nicht bedeckten Bandrändern des Endlosbandes und dem mittleren Bereich des Endlosbandes herkömmlicherweise ein Temperaturunterschied aus. In den unbedeckten Randbereiche des Bandes stellt sich üblicherweise eine höhere Temperatur ein als in den von dem Produkt bedeckten Bandabschnitten, da die bedeckten Bandabschnitte durch Verdunstung von Lösungsmittel aus dem Produkt gekühlt werden. Dies hat jedoch unterschiedliche Trocknungsgeschwindigkeiten in dem zu trocknenden Produkt selbst zur Folge, da Randbereiche des Produktes aufgrund ihrer Nähe zu den heißeren Rändern des Endlosbandes schneller trocknen als randfernere Bereiche des Produktes. Dieses Trocknungsverhalten ist jedoch ungünstig für das Ablösen des Produktes von dem Endlosband und erhöht zudem die Gefahr von Beschädigungen des Produktes im Zuge der weiteren Bearbeitungsschritte, wie beispielsweise Strecken und Dehnen auf dessen Enddimensionen. Auch für die Qualität des Produktes ist es sehr ungünstig, wenn die Trocknung ungleichmäßig verläuft. Darüber hinaus verzögert sich der Prozess bei ungleichmäßiger Trocknung des Produktes deutlich, da die Trocknungsgeschwindigkeit entsprechend gering gewählt werden muss. WO 2006/101220 A1 hat ein Filmgießverfahren zum Gegenstand, bei welchem eine Erhitzung des Bandes mittels Heißluft erfolgt.

Es ist daher eine Aufgabe der Erfindung, die oben genannten Nachteile zu überwinden und ein möglichst gleichmäßiges Trocknen des Produktes auf dem Endlosband zu ermöglichen. Diese Aufgabe wird mit einer Vorrichtung der eingangs genannten Art erfindungsgemäß dadurch gelöst, dass die zumindest eine Heizvorrichtung als Induktionsheizung ausgebildet ist und zumindest einen Induktor aufweist, dessen maximale Erstreckung quer zu einer Umfangsrichtung des Endlosbandes betrachtet kleiner ist als eine Bandbreite des Endlosbandes, wobei sich der zumindest eine Induktor in einer Bandquerrichtung des Endlosbandes betrachtet zumindest über eine Bandmitte und beidseitig an die Bandmitte anschließende Bereiche des Endlosbandes erstreckt.

Die erfindungsgemäße Lösung ermöglicht eine sehr homogene und gezielte Erwärmung des Produktes ohne die Bandränder selbst direkt zu erwärmen, wodurch eine deutlich gleichmäßigere Trocknung des Produktes erzielt wird.

Um unabhängig von der Dicke des feldführenden Endlosbandes die erforderliche Fläche zu erwärmen, hat es sich als besonders vorteilhaft herausgestellt, dass der zumindest eine Induktor ein Querfeldinduktor ist. Die Verwendung eines Querfeldinduktors hat sich als besonders vorteilhaft für die Trocknung von flächigen Produkten, die ein großes Verhältnis von Breite zu Dicke aufweisen, herausgestellt. Zudem ergibt sich bei Verwendung eines Querfeldinduktors ein sehr gleichmäßiges Temperaturprofil über die Produktbreite. Es hat sich auch herausgestellt, dass bei Vorhandensein einer Querschweißnaht in dem Band durch die Verwendung des Querfeldinduktors eine sehr gleichmäßige Temperaturverteilung zwischen der Querschweißnaht und den diese umgebenden Bereichen erzielt werden kann.

Als besonders vorteilhaft zur Trocknung des Produktes hat sich herausgestellt, dass der zumindest eine Induktor sich in Bandquerrichtung des Endlosbandes betrachtet über zumindest zwei Drittel der Bandbreite des Endlosbandes erstreckt.

Gemäß einer bevorzugten Weiterbildung der Erfindung, die eine besonders effiziente und gute und homogene Trocknung des Produktes ermöglicht, kann es vorgesehen sein, dass das Endlosband in Bandquerrichtung des Endlosbandes betrachtet eine Produktzone aufweist, die in einem Betriebszustand der Vorrichtung von dem Produkt bedeckt ist, wobei die Produktzone in Bandquerrichtung betrachtet eine geringere Breite als das Endlosband aufweist und sich der Induktor in Bandquerrichtung des Endlosbandes betrachtet im Wesentlichen über die Breite der Produktzone erstreckt.

Als besonders vorteilhaft hinsichtlich der Erwärmung des Endlosbandes hat sich eine Variante herausgestellt, bei welcher der zumindest eine Induktor zwischen Obertrum und Untertrum angeordnet ist, wobei bevorzugterweise zwischen dem Induktor und dem Obertrum zumindest ein Abstandhalter, insbesondere in Form einer Gleitplatte, angeordnet ist. Durch die Anordnung des optionalen Abstandhalters lässt sich ein konstanter Koppelabstand zwischen Endlosband und Induktor und somit eine optimale Energieübertragung gewährleisten.

Gemäß einer Ausführungsform, die sich besonders gut für eine sehr effiziente Erwärmung des Produktes sehr rasch nach dessen Aufbringung auf das Endlosband und somit für eine Beschleunigung des Trocknungsprozesses eignet, kann es vorgesehen sein, dass eine der zumindest zwei Rollen ein Gießrolle ist, über der eine Gießvorrichtung zum Aufbringen des Produktes angeordnet ist, wobei der zumindest eine Induktor in Materialflussrichtung betrachtet auf Höhe der Gießrolle und vor der Gießvorrichtung oder in Materialflussrichtung betrachtet nach der Gießrolle und zumindest einen Abschnitt zumindest eines ersten Viertels des Obertrums abdeckend angeordnet ist.

Eine besonders gute Steuerung des Trocknungsprozesses lässt sich dadurch erzielen, dass zumindest zwei Induktoren in einer Umlaufrichtung des Endlosbandes betrachtet, hintereinander angeordnet sind.

Der Trocknungsprozess lässt sich dadurch weiter optimieren, dass die Vorrichtung zumindest einen Düsenkasten mit je zumindest einer gegen eine Unterseite des Obertrums weisenden Ausströmöffnung für ein gasförmiges Medium aufweist.

Gemäß einer vorteilhaften Weiterbildung der Erfindung kann es vorgesehen sein, dass der zumindest eine Düsenkasten in einer Materialflussrichtung betrachtet nach dem zumindest einen Induktor angeordnet ist. Diese Variante der Erfindung ermöglicht durch die Kombination des strombetriebenen Induktors mit einem Düsenkasten neben einer Beschleunigung und Verbesserung des Trocknungsprozesses auch eine deutliche Reduktion der Betriebskosten.

Der Trocknungsprozess lässt sich dadurch weiter gleichmäßiger gestalten und verbessern, dass sich die zumindest eine Ausströmöffnung des zumindest einen Düsenkastens in Bandquerrichtung des Endlosbandes betrachtet zumindest über zwei Drittel der Bandbreite, insbesondere im Wesentlichen über die gesamte Produktbreite oder im Wesentlichen über die gesamte Bandbreite des Endlosbandes, erstreckt.

Zum besseren Verständnis der Erfindung wird diese anhand der nachfolgenden Figuren näher erläutert.

Es zeigen jeweils in stark vereinfachter, schematischer Darstellung:
- Fig. 1: eine erfindungsgemäße Vorrichtung;
- Fig. 2: einen Schnitt entlang der Linie II-II in Fig. 1;
- Fig. 3: einen Schnitt entlang der Linie III-III in Fig. 1 durch eine Variante der Erfindung und
- Fig. 4: einen Schnitt entlang der Linie III-III in Fig. 1 durch eine weitere Variante der Erfindung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

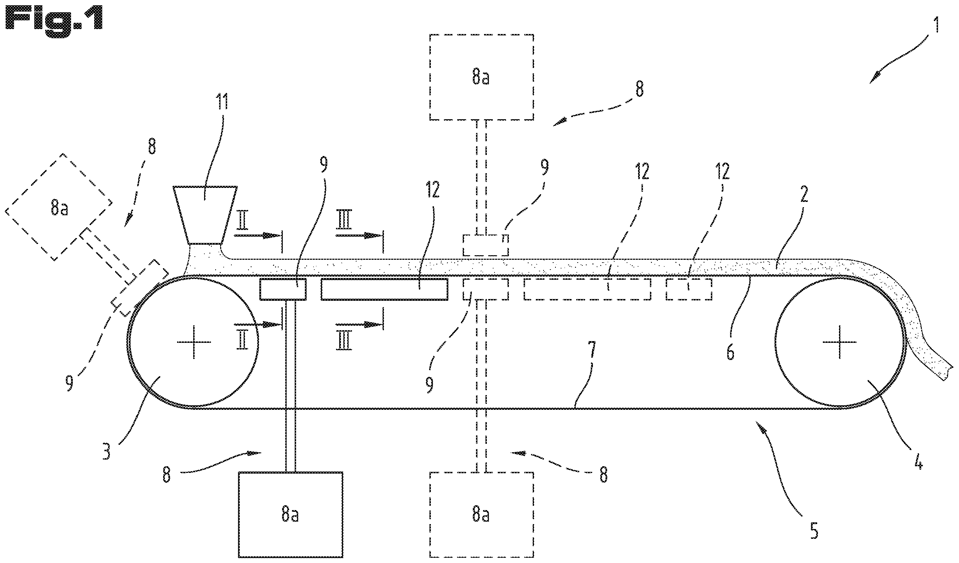

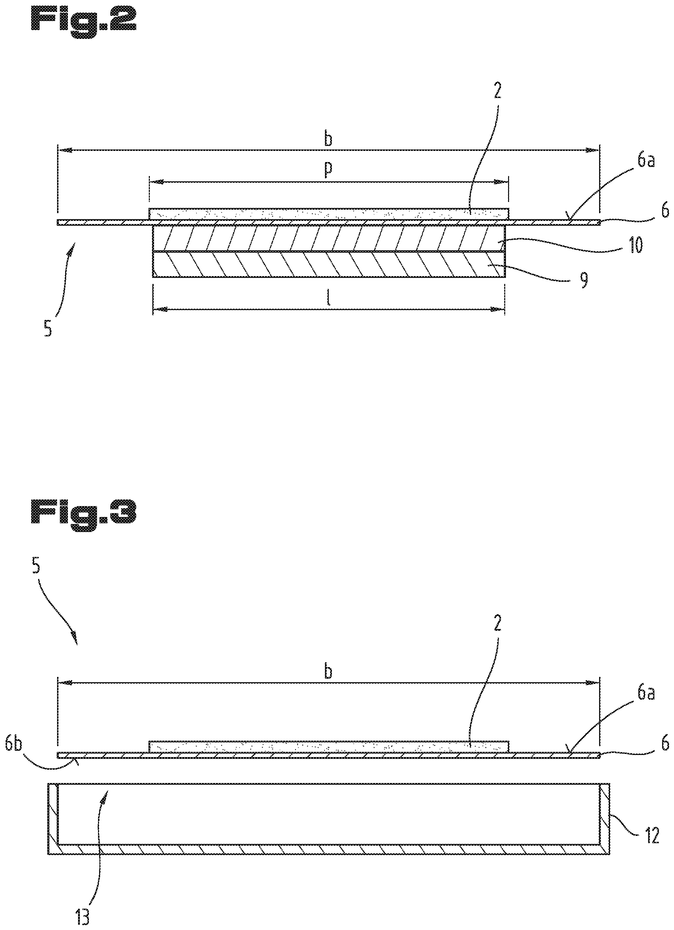

Gemäß Fig. 1 weist eine erfindungsgemäße Vorrichtung 1 zur Erwärmung und Trocknung eines Produkts 2 aus einem nicht ferromagnetischen Material, insbesondere eines Films, beispielsweise eines TAC-Films oder eines PVOH-Films, ein zwischen zwei Rollen 3, 4 umlaufendes Endlosband 5 aus Metall auf. Das Endlosband 5 weist ein Obertrum 6 sowie ein Untertrum 7 auf. Eine Bandaußenseite des Obertrums 6, die in Fig. 2 mit dem Bezugszeichen 6a gekennzeichnet ist, bildet eine Transport- bzw. Prozessfläche für das Produkt 2. Weiters weist die Vorrichtung 1 eine oder mehrere als Induktionsheizung ausgebildete Heizvorrichtungen 8 zur Erwärmung des Produktes 2 auf. Die Heizvorrichtung 8 weist einen Induktor 9 zur Erwärmung des Endlosbandes 5 bzw. des Produktes 2 auf. Der Induktor 9 kann mit einem Frequenzumrichter 8a verbunden sein und ist bevorzugt als Querfeldinduktor ausgebildet, sodass die Feldlinien des magnetischen Wechselfelds senkrecht zur Oberfläche des Endlosbandes 5 verlaufen.

Der Induktor 9 kann zwischen Obertrum 6 und Untertrum 7 angeordnet sein. Alternativ oder zusätzlich kann der Induktor 9 oder ein weiterer Induktor 9 über oder unter der Rolle 3 angeordnet sein. Die Rolle 3 dient hierbei als Gießrolle, über der eine Gießvorrichtung 11 zum Aufbringen des Produktes 2 auf das Obertrum 6 des Endlosbandes 5 angeordnet sein kann. Der Induktor 9 kann in Materialflussrichtung betrachtet beispielsweise vor der Gießvorrichtung 11 angeordnet sein. Der Induktor 9 kann in Materialflussrichtung betrachtet auch nach der als Gießrolle dienenden Rolle 3 angeordnet sein. In einer Umlaufrichtung des Endlosbandes 5 betrachtet können aber auch zwei oder mehrere Induktoren 9 hintereinander angeordnet sein. So kann beispielsweise zusätzlich oder alternativ zu einem vor der Gießvorrichtung 11 angeordneten Induktor 9 ein oder mehrere Induktoren 9 nach der Gießvorrichtung 11 angeordnet sein. Alternativ oder zusätzlich kann der Induktor 9 auch über dem Obertrum 6 angeordnet sein. Es versteht sich von selbst, dass auch mehrere Induktoren 9 über dem Obertrum 6 angeordnet sein können.

Ein nach der Rolle 3 angeordneter Induktor 9 deckt bevorzugt einen Abschnitt zumindest eines ersten Viertels des Obertrums 6 ab und befindet sich somit sehr nahe der Stelle, an welcher das Produkt 2 auf das Endlosband 5 aufgebracht wird.

Wie aus Fig. 2 hervorgeht ist die Erstreckung 1 des Induktors 9 quer zu einer Umfangsrichtung des Endlosbandes 5 kleiner als eine Bandbreite b des Endlosbandes 5. Weiters erstreckt sich der Induktor 9 in einer Bandquerrichtung des Endlosbandes 5 betrachtet zumindest über eine Bandmitte und beidseitig an die Bandmitte anschließende Bereiche des Endlosbandes 5. Bevorzugt erstreckt sich der Induktor 9 in Bandquerrichtung des Endlosbandes 5 betrachtet über zumindest zwei Drittel der Bandbreite b des Endlosbandes 5.

Wie aus Fig. 2 weiters hervorgeht, weist das Endlosband 5 in Bandquerrichtung des Endlosbandes 5 betrachtet eine Produktzone p auf, die in einem Betriebszustand der Vorrichtung 1 von dem Produkt 2 bedeckt ist. In Bandquerrichtung betrachtet weist die Produktzone p eine geringere Breite als das Endlosband 5 auf. Bevorzugt erstreckt sich der Induktor 9 in Bandquerrichtung des Endlosbandes 5 betrachtet im Wesentlichen über die Breite der Produktzone p.

Bevorzugterweise ist zwischen dem Induktor 9 und dem Obertrum 6 ein Abstandhalter 10, insbesondere in Form einer Gleitplatte, angeordnet, um einen Abstand zwischen dem Induktor 9 und dem Obertrum 6 konstant zu halten. Dies gilt insbesondere bei einer Ausführungsform, bei welcher der Induktor 9 zwischen dem Obertrum 6 und dem Untertrum 7 angeordnet ist.

Gemäß Fig. 1 können zusätzlich zu den Induktoren ein oder mehrere Düsenkästen 12 vorgesehen sein, durch die ein heißes Gas oder Gasgemisch, insbesondere heiße Luft, gegen eine in Fig. 3 mit dem Bezugszeichen 6b gekennzeichnete Unterseite des Obertrums 6 strömt. Besonders bevorzugt ist der zumindest eine Düsenkasten 12 in einer Materialflussrichtung betrachtet nach dem zumindest einen Induktor 9 angeordnet.

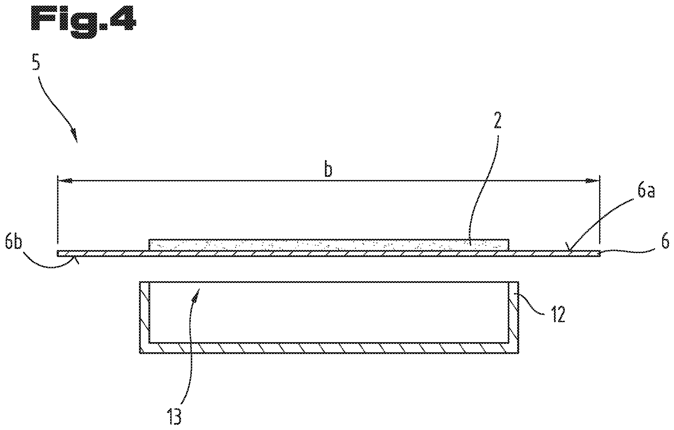

Wie aus Fig. 3 weiters ersichtlich ist weist ein Düsenkasten 12 Ausströmöffnung 13 für ein gasförmiges Medium auf. Gemäß einer vorteilhaften Ausführungsform erstreckt sich die Ausströmöffnung 13 des Düsenkastens 12 in Bandquerrichtung des Endlosbandes 5 betrachtet zumindest über zwei Drittel der Bandbreite b, insbesondere im Wesentlichen über die gesamte Bandbreite des Endlosbandes 5 oder wie in Fig. 4 dargestellt, im Wesentlichen über die gesamte Produktbreite p.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Vorrichtung
- 2: Produkt
- 3: Rolle
- 4: Rolle
- 5: Endlosband
- 6: Obertrum
- 6a: Bandaußenseite
- 6b: Unterseite
- 7: Untertrum
- 8: Heizvorrichtung
- 8a: Frequenzumrichter
- 9: Induktor
- 10: Abstandhalter
- 11: Gießvorrichtung
- 12: Düsenkasten
- 13: Ausströmöffnung
- b: Bandbreite
- 1: Erstreckung
- p: Produktzone

## Patentansprüche

1. Vorrichtung (1) zur Erwärmung und Trocknung zumindest eines Produkts (2) aus einem nicht ferromagnetischen Material, insbesondere eines Films, beispielsweise eines TAC-Films oder PVOH-Film, wobei die Vorrichtung (1) zumindest ein zwischen zumindest zwei Rollen (3, 4) umlaufendes Endlosband (5) aus Metall aufweist, wobei das Endlosband (5) ein Obertrum (6) sowie ein Untertrum (7) aufweist und eine Bandaußenseite (6a) des Obertrums (6) eine Transportfläche für das Produkt (2) bildet, wobei die Vorrichtung (1) zumindest eine Heizvorrichtung (8) zur Erwärmung des Produktes (2) aufweist, wobei eine der zumindest zwei Rollen (3, 4) ein Gießrolle ist, über der eine Gießvorrichtung (11) zum Aufbringen des Produktes (2) angeordnet ist, **dadurch gekennzeichnet, dass** die zumindest eine Heizvorrichtung (8) als Induktionsheizung ausgebildet ist und zumindest einen Induktor (9) aufweist, dessen maximale Erstreckung (1) quer zu einer Umfangsrichtung des Endlosbandes (5) betrachtet kleiner ist als eine Bandbreite (b) des Endlosbandes, wobei sich der zumindest eine Induktor (9) in einer Bandquerrichtung des Endlosbandes betrachtet zumindest über eine Bandmitte und beidseitig an die Bandmitte anschließende Bereiche des Endlosbandes (5) erstreckt, wobei der zumindest eine Induktor (9) in Materialflussrichtung betrachtet auf Höhe der Gießrolle und vor der Gießvorrichtung (11) oder in Materialflussrichtung betrachtet nach der Gießrolle und zumindest einen Abschnitt zumindest eines ersten Viertels des Obertrums (6) abdeckend angeordnet ist.

2. Vorrichtung nach Anspruch 1, **dadurch gekennzeichnet, dass** der zumindest eine Induktor (9) ein Querfeldinduktor ist.

3. Vorrichtung nach Anspruch 1 oder 2, **dadurch gekennzeichnet, dass** der zumindest eine Induktor (9) sich in Bandquerrichtung des Endlosbandes (5) betrachtet über zumindest zwei Drittel der Bandbreite (b) des Endlosbandes (5) erstreckt.

4. Vorrichtung nach einem der Ansprüche 1 bis 3, **dadurch gekennzeichnet, dass** der zumindest eine Induktor (9) zwischen Obertrum (6) und Untertrum (7) angeordnet ist, wobei bevorzugterweise zwischen dem Induktor (9) und dem Obertrum (6) zumindest ein Abstandhalter (10), insbesondere in Form einer Gleitplatte, angeordnet ist.

5. Vorrichtung nach einem der Ansprüche 1 bis 4, **dadurch gekennzeichnet, dass** zumindest zwei Induktoren (9) in einer Umlaufrichtung des Endlosbandes (5) betrachtet, hintereinander angeordnet sind.

6. Vorrichtung nach einem der Ansprüche 1 bis 5, **dadurch gekennzeichnet, dass** sie zumindest einen Düsenkasten (12) mit je zumindest einer gegen eine Unterseite (6b) des Obertrums (6) weisenden Ausströmöffnung (13) für ein gasförmiges Medium aufweist.

7. Vorrichtung nach Anspruch 6, **dadurch gekennzeichnet, dass** der zumindest eine Düsenkasten (12) in einer Materialflussrichtung betrachtet nach dem zumindest einen Induktor (9) angeordnet ist.

8. Vorrichtung nach Anspruch 6 oder 7, **dadurch gekennzeichnet, dass** sich die zumindest eine Ausströmöffnung (13) des zumindest einen Düsenkastens (12) in Bandquerrichtung des Endlosbandes (5) betrachtet zumindest über zwei Drittel der Bandbreite (b), insbesondere im Wesentlichen über die gesamte Produktbreite oder im Wesentlichen über die gesamte Bandbreite des Endlosbandes (5), erstreckt.

## Claims

1. A device (1) for heating and drying at least one product (2) made of a non-ferromagnetic material, in particular a film, for example a TAC film or PVOH film, wherein the device (1) comprises at least one endless belt (5) which is made of metal and which circulates between at least two rollers (3, 4), wherein the endless belt (5) has an upper run (6) and a lower run (7), and a belt outside (6a) of the upper run (6) forms a transport surface for the product (2), wherein the device (1) has at least one heating device (8) for heating the product (2), wherein one of the at least two rollers (3, 4) is a casting roller over which a casting device (11) for applying the product (2) is arranged, **characterized in that** the at least one heating device (8) is configured as an induction heater and has at least one inductor (9) whose maximum extent (1), as viewed transversely with respect to a circumferential direction of the endless belt (5), is smaller than a belt width (b) of the endless belt, wherein the at least one inductor (9) extends, as viewed in a transverse belt direction of the endless belt, at least over a belt center and regions of the endless belt (5) adjoining the belt center on both sides, wherein the at least one inductor (9), as viewed in the material flow direction, is arranged at the level of the casting roller and upstream of the casting device (11) or, as viewed in the material flow direction, downstream of the casting roller and covering at least a section of at least a first quarter of the upper run (6).

2. The device according to claim 1, **characterized in that** the at least one inductor (9) is a transverse field inductor.

3. The device according to claim 1 or 2, **characterized in that** the at least one inductor (9) extends over at least two thirds of the belt width (b) of the endless belt (5), as viewed in the transverse belt direction of the endless belt (5).

4. The device according to one of the claims 1 to 3, **characterized in that** the at least one inductor (9) is arranged between the upper run (6) and the lower run (7), wherein preferably at least one spacer (10), in particular in the form of a sliding plate, is arranged between the inductor (9) and the upper run (6).

5. The device according to one of the claims 1 to 4, **characterized in that** at least two inductors (9) are arranged one behind the other, as viewed in a direction of circulation of the endless belt (5).

6. The device according to one of the claims 1 to 5, **characterized in that** it comprises at least one nozzle box (12) with in each case at least one outflow opening (13), pointing towards an underside (6b) of the upper run (6), for a gaseous medium.

7. The device according to claim 6, **characterized in that** the at least one nozzle box (12) is arranged downstream of the at least one inductor (9) as viewed in a material flow direction.

8. The device according to claim 6 or 7, **characterized in that** the at least one outflow opening (13) of the at least one nozzle box (12), as viewed in the transverse belt direction of the endless belt (5), extends at least over two thirds of the belt width (b), in particular essentially over the entire product width or essentially over the entire belt width of the endless belt (5).

## Revendications

1. Dispositif (1) pour le chauffage et le séchage d'au moins un produit (2) en matériau non ferromagnétique, plus particulièrement d'un film, par exemple d'un film TAC ou d'un film PVOH, dans lequel le dispositif (1) comprend au moins une bande sans fin (5) en métal circulant entre deux rouleaux (3, 4), dans lequel la bande sans fin (5) comprend un brin supérieur (6) et un brin inférieur (7), et une face externe de bande (6a) du brin supérieur (6) constitue une surface de transport pour le produit (2), dans lequel le dispositif (1) comprend au moins un dispositif de chauffage (8) pour le chauffage du produit (2), dans lequel un des au moins deux rouleaux (3, 4) est un rouleau de coulée par au-dessus duquel un dispositif de coulée (11) est disposé pour l'application du produit (2), **caractérisé en ce que** l'au moins un dispositif de chauffage (8) est conçu comme un chauffage à induction et comprend au moins un inducteur (9) dont l'extension maximale (1), vue transversalement par rapport à une direction circonférentielle de la bande sans fin (5), est inférieure à une largeur de bande (b) de la bande sans fin, dans lequel l'au moins un inducteur (9) s'étend, vue dans une direction transversale de la bande sans fin, au moins au-dessus d'un centre de bande et des deux côtés sur les zones adjacentes au centre de bande de la bande sans fin (5), dans lequel l'au moins un inducteur (9) est disposé, vu dans la direction d'écoulement du matériau, à la hauteur du rouleau de coulée et avant le rouleau de coulée (11) ou, vu dans la direction d'écoulement du matériau, après le rouleau de coulée et de façon à recouvrir au moins une portion d'au moins un premier quart du brin supérieur (6).

2. Dispositif selon la revendication 1, **caractérisé en ce que** l'au moins un inducteur (9) est un inducteur à champ transversal.

3. Dispositif selon la revendication 1 ou 2, **caractérisé en ce que** l'au moins un inducteur (9) s'étend, vu dans la direction transversale de la bande sans fin (5), sur au moins deux tiers de la largeur de bande (b) de la bande sans fin (5).

4. Dispositif selon l'une des revendications 1 à 3, **caractérisé en ce que** l'au moins un inducteur (9) est disposé entre le brin supérieur (6) et le brin inférieur (7), dans lequel, de préférence, entre l'inducteur (9) et le brin supérieur (6), est disposé au moins une entretoise (10), plus particulièrement sous la forme d'une plaque coulissante.

5. Dispositif selon l'une des revendications 1 à 4, **caractérisé en ce qu'**au moins deux inducteurs (9) sont disposés l'un derrière l'autre, vus dans une direction circonférentielle de la bande sans fin (5).

6. Dispositif selon l'une des revendications 1 à 5, **caractérisé en ce qu'**il comprend au moins un caisson à buses (12) avec respectivement une ouverture de sortie (13), orientée contre une face inférieure (6b) du brin supérieur (6) pour un milieu gazeux.

7. Dispositif selon la revendication 6, **caractérisé en ce que** l'au moins un caisson à buses (12) est disposé, vu dans une direction d'écoulement du matériau, après l'au moins un inducteur (9).

8. Dispositif selon la revendication 6 ou 7, **caractérisé en ce que** l'au moins une ouverture de sortie (13) de l'au moins un caisson à buses (12) s'étend, vue dans la direction transversale de la bande sans fin (5), sur au moins deux tiers de la largeur de bande (b), plus particulièrement globalement sur toute la largeur du produit ou globalement sur toute la largeur de bande de la bande sans fin (5).
